**Europäisches Patentamt**

**European Patent Office**

**Office européen des brevets**

(11) Publication number: **0 392 860**
**A2**

# EUROPEAN PATENT APPLICATION

(21) Application number: **90304019.4**

(22) Date of filing: **12.04.90**

(51) Int. Cl.⁵: **B29B 7/48, B29C 47/66,**
**B29C 47/40**

(30) Priority: **14.04.89 JP 94739/89**

(43) Date of publication of application:
**17.10.90 Bulletin 90/42**

(84) Designated Contracting States:
**AT BE CH DE DK ES FR GB GR IT LI LU NL SE**

(71) Applicant: **POLYPLASTICS CO. LTD.**
**3-13, Azuchicho, 2-chome**
**Chuo-Ku Osaka-shi Osaka(JP)**

(72) Inventor: **Hiragohri, Motohito**
**3-24, Honmachi, Asama**
**Fuji-shi Shizuoka(JP)**

(74) Representative: **Jackson, Peter et al**
**HYDE, HEIDE & O'DONNELL 10-12 Priests**
**Bridge**
**London SW15 5JE(GB)**

(54) **Process and apparatus for preparing thermoplastic resin compositions.**

(57) Process and apparatus for preparing thermoplastic resin compositions comprising a thermoplastic base resin and at least one component homogeneously dispersed within the base resin, using an extruder having at least one extruder barrel and a screw rotatably disposed within each barrel such that upon rotation thereof the base resin is kneaded and melt-blended with the other component(s) to form the composition. The cross-section of an interior wall of each barrel along an axial zone thereof between an inlet and a discharge end of the extruder is characterized by being non-circular, preferably polygonal, so as to enhance the kneading action of the extruder.

## PROCESS AND APPARATUS FOR PREPARING THERMOPLASTIC RESIN COMPOSITIONS

The present invention relates generally to a process and apparatus for preparing thermoplastic resin compositions. More particularly, it relates to processes and apparatus for the preparation of thermoplastic resin compositions or polymer alloys having improved impact strength, elongation, flexing resistance and flexibility and which are obtained by adding a flexible thermoplastic resin, elastomer or rubber to a high-stiffness thermoplastic resin. It has been found that the beneficial effects attributable to the addition of such a flexible component are more efficiently obtained using a screw extruder having a specific internal shape.

The addition of a flexible thermoplastic resin, thermoplastic elastomer or synthetic rubber to a high-stiffness thermoplastic resin is conventional in situations where improvements in impact strength, elongation, flexing resistance and flexibility are desired. In this regard, extruders such as a single-screw extruder having a substantially cylindrical barrel-shaped casing or a twin-screw extruder having a casing in the form of two overlapping cylindrical barrels have been generally used for effecting the addition.

It is also known that the physical properties of a resin composition comprising both flexible and stiff components as described above are significantly affected by the dispersibility (e.g. the size of dispersed particles and homogeneity of the dispersion) of the flexible component in the thermoplastic resin matrix and the adhesion of the matrix resin to such a flexible component at the interface between them. Thus it is important in terms of further improvements to the impact strength, elongation, flexing resistance and flexibility of the resin composition that the dispersibility of the flexible component in the matrix resin be improved so as to obtain homogeneous dispersion thereof and a reduction in the size of dispersed particles. Various improvements in the screw extruders have been proposed for this purpose. For example it has been proposed to provide single-screw extruders with a Dulmage or Mardock screw. It has also been proposed to use cylinders or barrels having a circular cross-sectional form, or overlapping circles as described above for a twin-screw extruder, and to fit segmented screws each having a combination of a kneading disc element and a reversing screw element.

Although such extruders exhibit greater kneading efficiencies than a conventional extruder fitted with a full-flight screw, and thus in themselves exhibit improved efficiencies, it is still very difficult to use them to in a way that disperses a flexible component in a matrix resin homogeneously and in a state of fine particles. Thus the use of these extruders does not sufficiently enhance the impact strength, elongation, flexing resistance and flexibility of the resin composition.

Furthermore, the prior extruders described above tend to impose a high localized shearing force to the resin composition. Therefore, even when high shearing forces should be desirably applied to the entire resin mass in order to obtain an excellent degree of dispersion, an undesirable localized high shearing force is also applied. When such high localized shearing forces are applied the temperature of the composition increases due to the viscosity of the resin, which results in the thermal degradation of the composition, the lowering or insufficient improvement in its physical properties or its discoloration. That is, according to the prior art proposals using an extruder as described above, it is difficult to effect the homogeneous dispersion of an elastomer or rubber while balancing the above-noted factors, i.e. thoroughly dispersing the flexible component while suppressing a rise in the resin temperature so as to prevent deterioration and discoloration.

The present invention provides a new and improved process and apparatus for the preparation of a thermoplastic resin composition comprising a high stiffness thermoplastic resin and a flexible thermoplastic resin, elastomer or synthetic rubber composition which is free from the above problems and can give further improvement in the impact strength, elongation, flexing resistance and flexibility of the composition. More particularly the invention resides in using an extruder in which the casing which encloses the screw or screws has a specific internal configuration.

According to the present invention there is provided apparatus for preparing a thermoplastic resin composition comprising a thermoplastic base resin and at least one component homogeneously dispersed within the base resin, which apparatus comprises a screw extruder having a casing with one or more barrels each having a rotatable screw mounted therein, characterized in that the or each barrel has an axial zone of non-circular cross-section in a plane at right angles to the barrel axis such that the axial zone has an interior wall with grooves and/or ridges extending in a direction parallel to the barrel axis.

The invention also provides a process for preparing a thermoplastic resin composition comprising a thermoplastic base resin and at least one component homogeneously dispersed within the base resin, in which process the base resin and the said component(s) are kneaded in a screw extruder having a casing with one or more barrels each having a rotatable screw mounted therein, characterized in that the at least part of the kneading is effected in an axial zone of non-circular cross-section in a plane at right angles to the barrel axis such that the axial zone has an interior wall with grooves and/or ridges extending in a direction parallel to the barrel axis.

The term "cross-section" employed herein with reference to the extruder and its barrel or barrels refers to their configuration as taken along a plane substantially perpendicular to the elongate axis of the screw extruder.

The preferred configuration of the interior walls of the cylindrical barrels in the axial zone is a substantially polygonal cross-section perpendicular to the axial direction of the barrels, for example triangular, tetragonal, pentagonal, heptagonal or octagonal cross-sectional configurations.

The polygonal or other non-circular internal configuration of the barrels within the said axial zone(s) creates a number of corners, the number of such corners being dependent upon the particular polygonal configuration that is utilized. These corners will therefore establish a number of "pockets" which will accept an amount of thermoplastic material. More particularly, these "pockets" are inaccessible to the outermost perimeter of the screw flights during their operation.

In use, therefore, resin material will temporarily reside within the "pockets" formed at the intersecting corners. Movement of fresh material into these "pockets" via the rotation and action of the screws therefore cause a beneficial kneading action to occur in the barrel interior while not imparting deleteriously high shearing forces and the like to the resin.

Thus, the number of corners formed by the barrel cross-sectional configuration should be such that beneficial kneading action occurs without accumulation of resin material (i.e. so that resin material does not reside for prolonged time periods within the corners). In this regard, it has been found that, as the number of such corners decreases, the movement of resin material into and out of the corners is retarded with the possibility that resin material will accumulate in these corners over time. On the other hand, if there are too many corners present, a reduced kneading action therewithin results. It is preferred, therefore, that the cross-sectional configuration of the non-circular axial zone(s) of the extruder be a five-sided to eight-sided regular polygon (i.e. a regular pentagon to octagon). This preferred configuration provides 5 to 8 corners per barrel, the corners having an angle of 108 to 135°. For a twin-screw extruder the most preferred cross-sectional form of the barrels is that of a pair of hexagons that share one side. For a single screw extruder the most preferred configuration is a single hexagon.

In some instances it is beneficial for the polygonal configuration to have truncated corners, thereby forming relatively small planar segments joining relatively larger planar side walls, or rounded corners forming a smooth arcuate connection between planar side walls.

The zones within each barrel upstream and downstream of the said axial zone(s) can have virtually any cross-sectional configuration. Thus, their cross-sectional configuration may be similar to that of the said axial zone or may be different e.g. having an essentially circular cross-sectional configuration.

The preferred thermoplastic composition composition or polymer alloy (referred to herein merely as the "composition") comprises (A) a thermoplastic resin having a flexural modulus (determined according to ASTM D-790) of at least 1960MPa (20,000 kg/cm$^2$) and (B) 1 to 60% by weight (based on the weight of the composition) of one or more high-molecular weight compounds each having a flexural modulus of 980MPa (10,000 kg/cm$^2$) or below and selected from the group consisting of thermoplastic resins, thermoplastic elastomers and synthetic rubbers.

Examples of the thermoplastic resin (A) having a flexural modulus of at least 1960MPa include crystalline thermoplastic resins such as polyacetal, polyamide, polyarylene sulfide and polyesters (polyethylene terephthalate, polybutylene terephthalate and wholly aromatic polyesters); and noncrystalline thermoplastic resins such as polyvinyl chloride, polystyrene, ABS and AB resins, polyacrylate, polymethacrylate, polycarbonate, polyphenylene oxide, polyether sulfone and polysulfone.

Examples of the components (B) having a flexural modulus of 980MPa to be added to the high-stiffness thermoplastic resins (A) according to the present invention include ethylene-vinyl acetate copolymers, ethylene-acrylic acid (or its ester) copolymers, ethylene-methacrylic acid (or its ester) copolymers, ethylene-$\alpha$-olefin copolymers, ethylene-glycidyl (meth)acrylate copolymers, polyvinyl acetate, fluororesins, urethane elastomers, ester elastomers, amide elastomers, olefinic elastomers, acrylic elastomers, styrene elastomers, fluoroelastomers, butadiene elastomers, olefinic rubbers, acrylic rubbers, diene rubbers, urethane rubbers, silicone rubbers, fluororubbers and nitrile rubbers, which may each have a reactive group (such as epoxy, isocyanate or amino group) incorporated thereto, or may be each modified by known means such as crosslinking or grafting. The choice of material for component (B) is not particularly limited, and in general any known thermoplastic flexible resin, thermoplastic elastomer or synthetic rubber may be used.

The amount of the component (B) is 1 to 60% by weight (based on the weight of the composition). When the amount is less than 1 % by weight, the impact strength, elongation, flexing resistance and flexibility of the thermoplastic resin (A) will not substantially be improved, while when it exceeds 60% by weight, not only the mechanical, physical and chemical properties inherent in the thermoplastic resin (A) will be adversely affected. In addition, excess component (B) will adversely affect the composition's moldability and surface profile. The amount of the component (B) is preferably between 3 and 50% by weight, more preferably between 5 and 45% by weight, because the characteristics of the extruder according to the present invention are especially effective within these ranges to improve the impact strength, elongation, flexing resistance and flexibility of the resin.

As described above, the adhesion of the thermoplastic resin (A) to the dispersed component (B) at their interface is also an important factor for improving the impact strength, elongation, flexing resistance and flexibility of the resin composition. As a result, the combination of the components (A) and (B) is an important factor for obtaining a composition exhibiting improved impact strength, elongation, flexing, resistance and flexibility. It is preferred from this standpoint to use a combination of a component (A) selected from among polyacetal, polyester and polyarylene sulfide resins with a component (B) selected from among urethane, ester, olefin and acrylate thermoplastic resins, thermoplastic elastomers and synthetic rubbers.

As described above, the present invention is characterized by using an extruder having one or more barrels with an axial zone having a specific sectional form. In cross-section the said barrel zones define a non-circular internal wall with grooves and/or ridges which extend axially relative to the extruder and thus establish a kneading zone or zones therein.

More specifically, according to the present invention, a composition comprised of a high-stiffness thermoplastic resin and a flexible component selected from among flexible thermoplastic resins, elastomers and rubbers may be prepared using an extruder wherein the cross-sectional configuration of the inside wall (i.e. as viewed perpendicular to the extruder's elongate axis) has a substantially polygonal shape. By use of such an extruder, a flexible thermoplastic, elastomer or rubber can be dispersed homogeneously in the state of fine particles, so as not only to improve the impact resistance, elongation, flexing resistance and flexibility of the composition, but also to prevent discoloration of the resin due to heat build-up caused by high shearing forces typically associated with prior art techniques.

The screw extruder barrels according to the present invention are provided with at least one axial zone of polygonal or other non-circular cross-section. Such axial zones should be provided in the part of each barrel from the resin-plasticizing section to the tip of the extruder. It is possible to provide at least two such zones or to extend such a zone or zones along the whole length of the barrel. Preferably each such axial zone extends along the axial direction of the respective barrel along a distance (or a part thereof) between about one-third to about two-thirds of the axial distance between the feed and discharge ports of the extruder. Although the axial length of each said zone is not critical, it is preferred that its overall length be at least about 20% of the total axial length of the barrel (i.e., as measured between the feed and discharge ports) so that sufficient beneficial kneading functions attributable to the non-circular cross-section can be realized. When the length is too small, only a poor kneading effect will be attained.

An example of a twin-screw extruder SE according to the present invention is shown in the accompanying drawings, in which:

Figures 1 and 2 are schematic cross-sectional side and plan views respectively, showing one embodiment of an extruder according to the present invention;

Figure 3 is a schematic cross-sectional view of the axial kneading zone within the extruder shown in Figures 1 and 2, as taken along line I-I therein and also showing its intermeshing two-flight screw configuration;

Figures 4 to 7 are schematic cross-sectional views of other examples of the axial kneading zone, again taken along line I-I of Figures 1 and 2, and,

Figure 8 is a schematic cross-sectional view, also taken along line I-I of Figures 1 and 2, of a triple-flight screw extruder according to the present invention.

Although the accompanying drawings all depict a twin-screw extruder, it is to be understood that the present invention is not limited to a twin-screw configuration but may employ a single-, triple- or multiple-screw extruder. The use of a twin-screw extruder is, however, generally preferred in respect of its kneading properties, operability and economic efficiency.

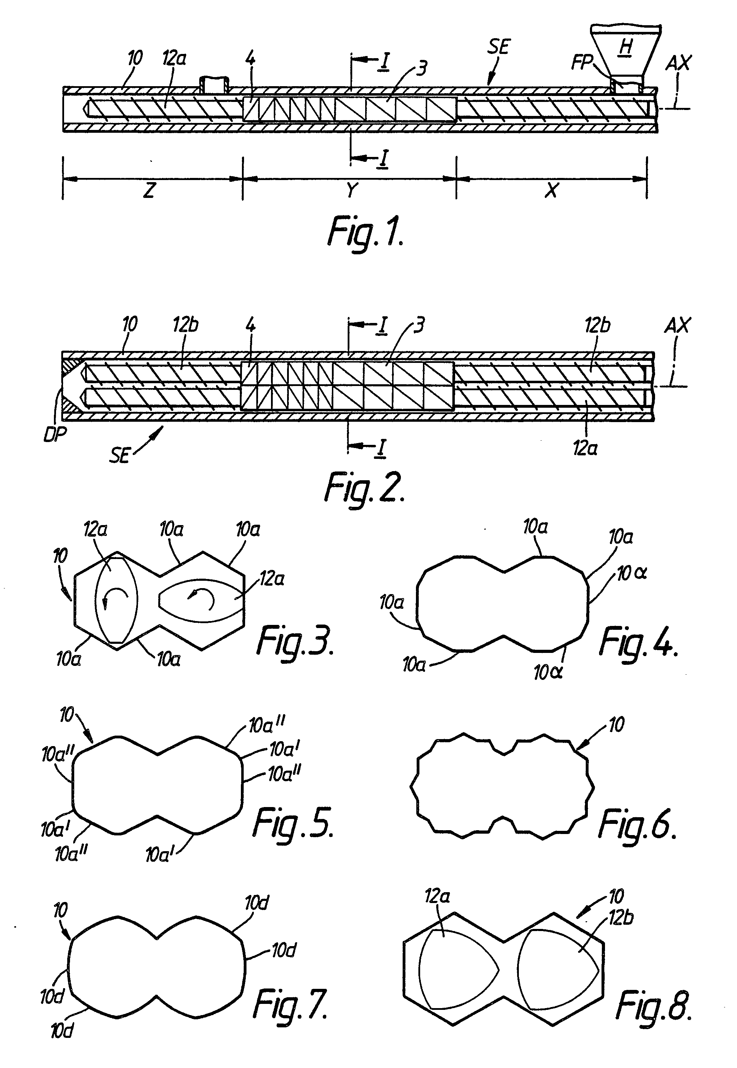

Figures 1 and 2 show a particularly preferred embodiment of a screw extruder SE according to the present invention. The screw extruder SE includes a double barrel casing 10, in which a pair of screws 12a, 12b are disposed for rotation about respective axes parallel to the elongate central axis AX of the extruder SE. In this regard, the screws 12a, 12b, may be rotated cocurrently or countercurrently relative to one another. A hopper H is provided so as to introduce raw material (usually in the form of pellets) into the casing 10.

The screws 12a, 12b establish within the casing 10 of the screws extruder SE, sequential (i.e. in the direction of material flow within casing 10 from the hopper H towards a discharge port DP) Zones X, Y and Z. In this regard, the outer Zones X and Z are of a conventional cross-sectional configuration , i.e. preferably essentially circular in cross-sectional configuration. The cross-sectional configuration of Zone Y, however, as viewed in longitudinal cross-section within Zone Y, is of a substantially polygonal cross-sectional configuration in accordance with the present invention. Specifically as illustrated schematically in accompanying Figures 3 and 8, the cross-sectional form is that of a pair of hexagons that share one side.

In use, therefore, resin material will temporarily reside within the "pockets" formed at the intersecting corners of Zone Y of the polygonal cross-sectional casing 10. Movement of fresh material into these "pockets" via the rotation and action of the screws 12a, 12b causes the desired beneficial kneading action without imparting deleteriously high shearing forces.

Figures 4 to 8 show examples of other cross-sectional configurations for the Zone Y within the casing 10 of the screw extruder according to the present invention. In this regard, Zone Y in Figure 4 is essentially in the form of a pair of regular hexagons having truncated corners thereby forming relatively small planar segments (a few of which are identified by numeral 10a in Figure 4) joining the relatively larger converging planar side walls 10α. Figure 5 is similar to Figure 4, but the Zone Y corners have been rounded so as to form a smooth arcuate transition 10a' between the converging planar side walls 10a''. Figure 6 shows a cross-sectional form whereby two pairs of regular hexagons are essentially axially superimposed but angularly offset relative to one another. Zone Y in Figure 7 is essentially in the form of a pair of regular hexagons, but the sidewalls 10d thereof have a slight convex curve. Figure 8 shows a Zone Y configuration identical to Figure 3, and also shows the use of triple flight screws 12a and 12b.

The extruder Zones X and Z, respectively upstream and downstream of Zone Y, are both of essentially circular cross-sectional configuration.

The screw extruder SE according to the present invention may use virtually any screw, for example, single, double or triple-flight screws. Furthermore, when twin-screws are used, they may be rotated in either cocurrent or countercurrent rotational directions. Single-screws that may be used in the present invention may also be provided with a Dulmage-type screw. The twin screws illustrated in Figures 1 and 2 are fitted with screw segments having a combination of a kneading disc element 3 and a reversing screw element 4. It is particularly preferred to use a co-rotating twin-screw extruder wherein a part or the entire axial length of each of the screw sections corresponds to Zone Y (as shown in Figure 1) is in the form of an intermeshed twin or triple flight screws (as shown in Figures 3 and 8, respectively) and wherein the cross-sectional configuration of the inside wall or the casing (i.e., perpendicular to the axial direction) has a substantially polygonal form which extends in the axial direction. It is also preferred that the screw-section corresponding to the Zone Y be provided with at least one reversing screw element 4 for transferring the resin a reverse direction (i.e., in a direction towards the feed port FP) to thereby fill the casing interior with molten resin, and to thus effect efficient kneading.

The preparation of a composition comprising a high-stiffness thermoplastic resin (A) and a flexible component (B) according to the present invention is not particularly limited except for the use of the screw extruder of the type as described above. Otherwise, the composition may be prepared using conventional techniques and under conventional conditions. For example, the preparation can be carried out by preliminarily mixing the components (A) and (B) with each other and then extruding the mixture. Alternatively, the components (A) and (B) may be fed into the screw extruder SE at different locations without premixing. The components (A) and /or (B) may also be pulverised prior to being fed into the extruder. Conditions such as temperature and the rotation rate (RPM) of the screw may be suitably selected depending upon the characteristics of the resin.

The resin compositions of the present invention may contain known additives typically employed in thermoplastic or thermosetting resins depending upon the required performance characteristics. Examples of such additives include stabilizers such as antioxidant and ultraviolet absorbers; antistatic agents; flame retardant and auxiliary flame retardants; coloring agents such as dyes and pigments; lubricants; crystallization accelerators (nucleating agents); and fibrous, powdery, granular or flaky inorganic fillers.

The extruder to be used in the present invention is characterized in that each barrel has a specific sectional form to exhibit kneading action suitable for the blending of the high stiffness thermoplastic resin (A) with the flexible component (B). Accordingly, the extruder is particularly suitable for the preparation of a composition comprising these components.

## EXAMPLES

The present invention will be described in more detail by referring to the following non-limiting Examples.

## Examples 1 to 8 and Comparative Examples 1 to 8

Polyacetal, polybutylene terephthalate and polyphenylene sulfide resins were each blended with a resin, elastomer or rubber given in Table 1 by the use of an extruder according to the present invention to obtain compositions which were then evaluated. The extruder used was one having a structure as shown in Figures 1 and 2. In the extruder shown therein, the cylinder is of a block style, i.e. of a replaceable type, and the inside wall of the cylinder corresponding to the Zone Y has a section of two combined hexagons perpendicular to the axial direction and the inside wall thereof corresponding to the other zones (shown in Figures 1 and 2 as X and Z) has a sectional form of two overlapping circles. The screw is of a segment type and constituted of an intermeshing two-flight screw element in the area corresponding to the zone Y shown in Figures 1 and 2 and a reversing screw element in the area adjacent to the two-flight screw element on the nozzle side. Thus, sufficient plasticizing and kneading are attained in the Zone Y.

For comparison, the same starting materials as those above were blended into combined compositions by the use of a twin-screw extruder wherein the section of the cylinder side wall perpendicular to the axial direction has a form of two overlapping circles along the whole length of the cylinder. These compositions were also evaluated and the results are shown in Table 1.

The methods of measurement of the physical properties employed therein were as follows:
tensile strength and elongation:
according to ASTM D-638
Izod impact strength:
according to ASTM D-256
flexural modulus:
according to ASTM D-790

Table. 1

| Composition | | | | Ex. 1 | Comp. Ex. 1 | Ex. 2 | Comp. Ex. 2 | Ex. 3 | Comp. Ex. 3 | Ex. 4 | Comp. Ex. 4 |
|---|---|---|---|---|---|---|---|---|---|---|---|
| Composition | (A) | polyacetal resin | (% by weight) | 85 | 85 | 90 | 90 | 70 | 70 | 90 | 80 |
| | | polybutylene terephthalate resin | ( " ) | - | - | - | - | - | - | - | - |
| | | polyphenylene sulfide resin | ( " ) | - | - | - | - | - | - | - | - |
| | (B) | urethane polymer[*1] | ( " ) | 15 | 15 | - | - | - | - | - | - |
| | | ester polymer[*2] | ( " ) | - | - | 10 | 10 | - | - | - | - |
| | | olefinic polymer[*3] | ( " ) | - | - | - | - | 30 | 30 | - | - |
| | | acrylate polymer[*4] | ( " ) | - | - | - | - | - | - | (EEA) 10 | (EGMA) 10 |
| Sectional form of cylinder of the extruder used | | | | hexagonal | circular | hexagonal | circular | hexagonal | circular | hexagonal | circular |
| Evaluation | | Izod impact strength (notched) | (kg·cm/cm) | 10.2 | 9.4 | 11.5 | 8.3 | 34.7 | 16.4 | 9.5 | 7.6 |
| | | tensile strength | $(kg/cm^2)$ | 470 | 480 | 510 | 513 | 319 | 308 | 490 | 492 |
| | | tensile elongation | (%) | >200 | 120 | 160 | 66 | >200 | 113 | >200 | 125 |
| | | flexural modulus | $(kg/cm^2)$ | 16000 | 14000 | 20800 | 20500 | 10600 | 10500 | 19600 | 19700 |
| | | particle size of dispersed component (B) | (µm) | 1.5 ∿ 2.0 | 3 ∿ 6 | - | - | 2 ∿ 5 | 3 ∿ 8 | - | - |

*1 polyurethane elastomer of adipate type

*2 polyester elastomer comprising polybutylene terephthalate segment and polytetramethylene glycol segment

*3 ethylene-α-olefin copolymer grafted with maleic anhydride

*4 ethylene-ethyl acrylate copolymer (EEA) or ethylene-glycidyl methacrylate copolymer (EGMA)

EP 0 392 860 A2

Table 1 (cont'd)

| Composition | | | (% by weight) | Ex. 5 | Comp. Ex. 5 | Ex. 6 | Comp. Ex. 6 | Ex. 7 | Comp. Ex. 7 | Ex. U | Comp. Ex. U |
|---|---|---|---|---|---|---|---|---|---|---|---|
| | (A) | polyacetal resin | ( ) | - | - | - | - | - | - | - | - |
| | | polybutylene terephthalate resin | ( ) | 90 | 90 | 70 | 70 | 90 | 90 | - | - |
| | | polyphenylene sulfide resin | ( ) | - | - | - | - | - | - | 90 | 90 |
| | (B) | urethane polymer[1] | ( ) | - | - | - | - | - | - | - | - |
| | | ester polymer[2] | ( ) | - | 10 | - | - | - | - | - | - |
| | | olefinic polymer[3] | ( ) | 10 | - | 30 | 30 | - | - | - | - |
| | | acrylate polymer[6] | ( ) | - | - | - | - | (EGMA) 10 | (EGMA) 10 | (EGMA) 10 | (EGMA) 10 |
| Sectional form of cylinder of the extruder used | | | | hexagonal | circular | hexagonal | circular | hexagonal | circular | hexagonal | circular |
| Evaluation | | Izod impact strength (notched) | (kg·cm/cm) | 11.3 | 9.8 | 30.3 | 23.0 | 12.0 | 10.5 | 4.5 | 3.7 |
| | | tensile strength | (kg/cm$^2$) | 460 | 475 | 242 | 235 | 463 | 460 | 692 | 700 |
| | | tensile elongation | (%) | >200 | >200 | >200 | >200 | >200 | >200 | 14 | 12 |
| | | flexural modulus | (kg/cm$^2$) | 18000 | 19000 | 10600 | 10600 | 19500 | 19600 | 27600 | 27500 |
| | | particle size of dispersed component (B) | (μm) | - | - | 0.5~1.5 | 1~2 | - | - | - | - |

[1] polyurethane elastomer of adipate type
[2] polyester elastomer comprising polybutylene terephthalate segment and polytetramethylene glycol segment
[3] ethylene-α-olefin copolymer grafted with maleic anhydride
[6] ethylene-ethyl acrylate copolymer (EEA) or ethylene-glycidyl methacrylate copolymer (EGMA)

According to the process of the present invention for the preparation of a composition comprising a high-stiffness thermoplastic resin and a flexible component selected from among flexible thermoplastic resins, elastomers and rubbers which is characterized by using an extruder wherein the section of the cylinder inside wall perpendicular to the axial direction has a non-circular form, preferably substantially polygonal, a flexible thermoplastic, elastomer or rubber can be homogeneously dispersed in a state of fine particles, so that not only the impact resistance, elongation, flexing resistance and flexibility of the composition can be further improved, but also the discoloration of the resin due to heat build-up caused by shearing can be depressed without damaging the other physical properties.

**Claims**

1. Apparatus for preparing a thermoplastic resin composition comprising a thermoplastic base resin and at least one component homogeneously dispersed within the base resin, which apparatus comprises a screw extruder having a casing with one or more barrels each having a rotatable screw mounted therein, characterized in that the or each barrel has an axial zone of non-circular cross-section in a plane at right angles to the barrel axis such that the axial zone has an interior wall with grooves and/or ridges extending in a direction parallel to the barrel axis.

2. Apparatus as claimed in claim 1, in which the said interior wall has a substantially polygonal cross-section perpendicular to the axial direction.

3. Apparatus as claimed in claim 1 or claim 2, in which the length of the or each axial zone is at least 20% of the overall axial length of the respective barrel.

4. Apparatus as claimed in claim 1 or claim 2, in which the or each axial zone extends along the respective barrel for at least one-third to two-thirds of the distance between feed and discharge ports of the extruder.

5. Apparatus as claimed in any preceding claim in which the extruder is a twin-screw extruder.

6. Apparatus as claimed in claim 5 in which the extruder has a pair of intermeshed co-rotatable screws and the screws are each provided with two or three flights.

7. Apparatus as claimed in any preceding claim in which a downstream section of each screw is provided with a reversing screw flight.

8. A process for preparing a thermoplastic resin composition comprising a thermoplastic base resin and at least one component homogeneously dispersed within the base resin, in which process the base resin and the said component(s) are kneaded in a screw extruder having a casing with one or more barrels each having a rotatable screw mounted therein, characterized in that the at least part of the kneading is effected in an axial zone of non-circular cross-section in a plane at right angles to the barrel axis such that the axial zone has an interior wall with grooves and/or ridges extending in a direction parallel to the barrel axis.

9. A process as claimed in claim 8, in which the said interior wall has a substantially polygonal cross-section perpendicular to the axial direction.

10. A process as claimed in claim 8 or claim 9, in which the composition comprises (A) a thermoplastic resin having a flexural modulus (determined according to ASTM D-790) of at least 1960MPa (20,000 kg/cm$^2$) and (B) 1 to 60% by weight (based on the weight of the composition) of one or more high-molecular weight compounds each having a flexural modulus of 980MPa (10,000 kg/cm$^2$) or below and selected from the group consisting of thermoplastic resins, thermoplastic elastomers and synthetic rubbers.

11. A process as claimed in any one of claims 8 to 10, in which the thermoplastic resin (A) is selected from polyacetal, polyester and polyarylene sulfide resins, and the component (B) is selected from urethane, ester, olefin and acrylate resins, elastomers or rubbers.

Fig.1.

Fig.2.

Fig.3.

Fig.4.

Fig.5.

Fig.6.

Fig.7.

Fig.8.